# EUROPEAN PATENT APPLICATION

(11) **EP 0 773 265 A2**
(43) Date of publication of application: **14.05.1997**
(21) Application number: 96117933.0
(22) Date of filing: 08.11.1996
(51) Int. Cl.: C09B 67/20, C08J 3/20

(54) **Granular colorant for synthetic resin and process for producing the same**

(30) Priority: 11.11.1995 JP 262699/95
(71) Applicant: Hishida, Shingo, Suita-shi, Osaka 565 (JP)
(72) Inventor: Hishida, Shingo, Suita-shi, Osaka 565 (JP)
(74) Representative: VOSSIUS & PARTNER

(57) **Abstract**

A granular colorant for a synthetic resin is provided, having the advantages that there is no contamination to the hands of an operator, molding apparatuses and the working environment, that the particle size is uniform, the weighing accuracy in using an automatic batching feeder is high, the mixing ratio of the colorant and a resin does not change, the dispersibility to a molding resin is good, the production is simple, and the production cost is low. The granular colorant has a particle size of 7 to 100 meshes, and comprises thermoplastic resin powder particles having a particle size of 5 to 100 meshes as a nucleus, a colorant composition comprising a coloring component which comprises an organic or inorganic dye or pigment, and optionally, a binder, wherein the colorant composition is fixed onto the surface of the thermoplastic resin powder particles. The colorant can be produced by mixing the thermoplastic resin powder as the nucleus, the coloring component and the dispersant with a mixing machine, and fixing the coloring composition onto the surface of the nucleus by the dispersant melted by friction heat generated in mixing, or mixing the thermoplastic resin powder, the coloring component, and the dispersant, adding the binder to the resulting mixture at a time when the friction heat generated by mixing does not sufficiently rise, and further mixing the resulting mixture. Colored synthetic resin molded products can be obtained by mixing the granular colorant with a thermoplastic molding resin, and molding the resulting mixture.

## Description

The present invention relates to a granular colorant for synthetic resins such as a thermoplastic molding resin, and to a process for producing the same.

Heretofore, as colorants for thermoplastic molding resins, there have been known a powder form colorant (dry color), a granular form colorant (granulated color), a liquid form colorant (liquid color), and moreover one called "masterbatch" which is prepared by incorporating a colorant into a resin at high concentration.

Powdery dry colorants have such advantages that they are inexpensive and production thereof is simple. However, because of the powder form, powdery dry colorants have a greatest disadvantage that working circumstances, molding machines and operators suffer from contamination due to scattering of the colorant. For that reason, powdery dry colorants gradually disappear from the market.

The granulated colorants having a granular form include soft type colorants and hard type colorants. Soft type granulated colorants maintain their granular form during transportation and until introduction thereof into a molding machine upon molding to mix with a molding resin, thereby being considered that no granulated colorants scatters. However, actually a part of the soft type granulated colorant forms a powder, and also easily forms a powdery dry colorant in a mixing machine for mixing with a molding resin, resulting in the disadvantage that it is difficult to prevent contamination in the mixing machine or in the vicinity of a hopper of a molding machine. Further, soft type granulated colorants are produced by the following steps of: adding a dispersant to the colorant; mixing the resulting mixture to prepare a dry colorant; adding an oil or a wax to the dry colorant; and then mixing; the resulting mixture using an appropriate mixing machine with mixing blades (e.g. supermixer) at an appropriate rotational speed for an appropriate time, to thereby produce a granular colorant. However, the soft type granulated colorant thus produced have such disadvantages that their particle size becomes extremely ununiform, and the granulated colorant adheres to the hand of the operator or to the machine resulting in contamination as described above. For that reason, the soft type granulated colorant is also gradually less used.

On the other hand, hard type granulated colorants are granular colorants prepared by hardening a colorant with a resin or a wax. Therefore, the hard type granulated colorant does not form a powder during transportation or in the mixing machine, unlike the soft type granulated colorant, and melts upon heating in the molding machine. However, this hard type granulated colorant is highly hardened on its entirety, and contains a coloring component in a concentration higher than that in the masterbatch as described hereinbelow. Therefore, because of a poor melt of the hard type granulated color, poor dispersion to a molding resin tends to occur. However, the greatest disadvantage of the conventional hard type granulated colorants is that the production steps thereof are complicated. That is, the conventional hard type granulated colorants have been produced by the following steps:
(1) A dispersant is added to a coloring component such as a dye or a pigment, and the resulting blend is mixed to form a dry colorant;
(2) Water, oil, liquid resin and/or wax are added to the dry colorant, and the resulting blend is kneaded with, for example, a kneader to form a pasty material (the dry colorant in the form of a powder may be used as it is);
(3) The pasty material is extruded in a yarn shape with a granulator (an extruder generally called mince type for making noodles or fine noodles, or in addition to this, heated with a heater), and the extruded material is cut to form a pellet-like material;
(4) The pellet-like material is treated with a sizer generally called a mulmelizer to convert the material into a granular form;
(5) Large-sized granules and powder in the granular form material are removed with a sieve to make the particle size of the granules uniform; and
(6) Granules having a large moisture content are dried with a drier to obtain a product.

Thus, complicated steps have conventionally be required to produce the hard type granulated colorant.

Furthermore, liquid colorants in a liquid form are scarcely used in view of complicated production steps, problems with vessels for storage thereof, and because a specific pump is necessary for mixing them with a molding thermoplastic resin.

Further, the masterbatch is recently becoming the main current. However, the masterbatch requires a first step of preparing a dry colorant, and a second step of incorporating the dry colorant into a resin using an extruder. As a result, the masterbatch also has the disadvantages that loss of material is unavoidable before and after operation with an extruder, it requires much time to clean a mixing machine or a molding machine when changing a colorant, and production costs are high.

An object of the present invention is to provide a colorant for thermoplastic molding resins, having the advantages that its production is simple, the particle size is uniform, the mixing ratio of colorant and resin does not change even when using an automatic batching feeder which is improved in weighing accuracy, no contamination occurs to the hand of the operator, molding apparatuses such as a mixer and a molding machine, and also to the working environment, and moreover dispersibility to a molding resin is good, and furthermore manufacturing cost is low.

Another object of the present invention is to provide a process for producing the colorant for thermoplastic molding resins.

According to one aspect of the present invention, there is provided a granular colorant for thermoplastic molding resins, comprising: 99 to 1 parts by weight of thermoplastic resin powder particles having a particle size of 5 to 100 meshes, as a nucleus; and 1 to 99 parts by weight of a colorant composition which comprises a coloring component selected from organic or inorganic dyes and inorganic and organic pigments, pigment, and a dispersant, the colorant composition being fixed onto a surface of the thermoplastic resin powder particles. Furthermore, according to one embodiment a binder can be added to the colorant composition in an amount of 1 to 10 parts by weight per 100 parts by weight of the colorant composition to provide the granular colorant for thermoplastic molding resins according to the present invention.

In a preferred embodiment of the present invention, the granular colorant has a particle size in the range of 7 to 100 meshes. According to another preferred embodiment of the present invention, a granular colorant having further uniform particle size can be formed by using nuclei of the resin having a small particle size range, for example 5 to 20 meshes, 20 to 50 meshes or 50 to 100 meshes.

According to another aspect of the present invention, there is provided a process for producing the granular colorant for thermoplastic molding resins, which comprises mixing a thermoplastic resin powder as a nucleus, a coloring component selected from organic or inorganic dyes and organic and inorganic pigments, and a dispersant with a mixing machine, thereby fixing the coloring component onto the surface of the particles of the thermoplastic resin powder by the action of the dispersant. In this case, the process for producing the granular colorant according to the present invention may comprise that the coloring component comprising a dye or a pigment is fixed onto the surface of the thermoplastic resin powder particles as the nucleus by melting the dispersant by friction heat generated in mixing with the mixing machine. Further, in the process for producing the granular colorant according to the present invention it may be preferred that, when a binder is used, the thermoplastic resin powder as the nucleus, the coloring component selected from an organic or inorganic dye or pigment, and the dispersant are mixed with a mixing machine, and the binder is added to the resulting mixture, thereby the coloring component being fixed onto the surface of the thermoplastic resin powder. In this case, it may be preferred in the process for producing the granular colorant according to the present invention that the coloring component and the dispersant are mixed, and the binder is then added thereto at a time when the friction heat does not sufficiently rise.

As described above, one of the characteristics of the colorant for thermoplastic molding resins and of the process for producing the same according to the present invention is that the thermoplastic resin powder particles are used as the nucleus, and the coloring component comprising a dye or a pigment is fixed onto the surface of the nucleus, whereby a granular colorant having a uniform particle size can be produced in a very simple manner.

Now, the description is made in detail of the process for producing the granular colorant for a thermoplastic resin according to the present invention.

The coloring component comprising a dye or a pigment, a dispersant, and a synthetic resin powder as a nucleus are charged in a mixing machine having multistage blades, and the charge is mixed at a high speed of 1,000 or more rpm. After about 5 minutes, the dispersant melts by friction heat generated between the dispersant and the blades, and the coloring component is fixed onto the surface of the particles of the synthetic resin powder. As a result, a granular colorant can be formed.

Furthermore, when a binder is used, the coloring composition comprising the coloring component and the dispersant is mixed with the synthetic resin powder as the nucleus, the resulting mixture is mixed for a time to an extent that the friction heat does not sufficiently rise (about 3 minutes), and the binder is then added to the resulting mixture in an amount of 1 to 10 parts by weight per 100 parts by weight of the colorant composition. As a result, a granular colorant which does not cause contamination can be produced by the melting of the dispersant and also by a molten coating of the binder resin.

Examples of the thermoplastic molding resin which can be used in producing the granular colorant of the present invention include olefinic resins such as polyethylenes (PE), polypropylenes (PP), or ethylene-vinyl alcohol copolymers (EVA); styrenic resins such as polystyrenes, acrylonitrile-styrene resins (AS), or acrylonitrile-butadiene-styrene resins (ABS); and engineering plastics (so-called EP) such as acrylic resins, polyamide resins, polybutylene terephthalates (PBT), polyethylene terephthalates (PET), or polycarbonates (PC).

The granular colorant of the present invention is added to a powder or pellets of the above-described thermoplastic molding resin, and the resulting mixture is mixed and molded. As a result, colored synthetic resin products can be obtained.

In the granular colorant according to the present invention, the synthetic resin powder as the nucleus, which can be used, is a powder of the above-described thermoplastic molding resin, or a powder of a thermoplastic resin which is compatible therewith. Examples of the synthetic resin powder include coumarone resins, petroleum resins, terpene resins, polyvinyl butyrals (PVB), and polyvinyl formals (PVFM). It is necessary for the synthetic resin as the nucleus to have a softening point such that the synthetic resin does not melt by friction heat generated in mixing the same with the coloring component or the dispersant. The synthetic resin preferably has a softening point of 150°C or more. Further, the synthetic resin powder preferably has a particle size of 5 to 100 meshes. It is further preferred to use a synthetic resin powder having a small particle size difference, that is, having a narrow particle size distribution and a uniform particle size, in order to obtain a granular colorant having a uniform particle size.

The dispersant used in the present invention is a conventional dispersant. Examples of the dispersant include metal soaps, higher fatty acids, surfactants, and low molecular weight materials. Those dispersants may be used alone or as mixtures of two or more thereof.

The binder used in the present invention is a thermoplastic resin. Thermoplastic resins having a melting point of 150°C or less and which can form a soft rubber coating are preferred. Examples of the binder include vinyl acetate resins, butadiene resins, low molecular weight polyethylene resins, ethylene-vinyl acetate (EVA) resins, petroleum resins, maleic acid resins, polyvinyl butyrals (PVB), polyvinyl formals (PVFM), and ionomer resins. If a small amount of a plasticizer is further added to the binder, more preferred results are obtained.

The present invention is described in more detail by referring to the following examples, but it should be understood the invention is not construed as being limited thereto. Unless otherwise indicated, all percents and parts are by weight.

### EXAMPLE 1

An appropriate amount of a coloring component of a dye or a pigment, a dispersant, and a synthetic resin powder as a nucleus, in the formulation shown in Tables 1 to 3 below, are mixed with a stainless steel mixing machine having a volume of 20 liters (manufactured by Towa Chemical Co.) at 1,700 rpm for 5 minutes. The inside temperature of the mixing machine rose to about 120°C by friction heat generated between the mixing blades and the raw material. The dispersant melted, and the pigments/dyes were fixed onto the surface of the particles of the powder resin. As a result, granular colorants having substantially uniform particle size were obtained. The granular colorants thus obtained were passed through a two-stage sieve having a lower sieve opening of 100 meshes and an upper sieve opening of 50 meshes to remove defective particles (having an ununiform particle size), thereby obtaining a product of granular colorants.

**TABLE 1**

| (Colorant Formulation 1-1) | | |
|---|---|---|
| | Formulation Component | Amount(parts) |
| Coloring component | Titanium oxide (SR-1, manufactured by Sakai Chemical Industry Co. Ltd.) | 5 |
| | Iron oxide red (40G; manufactured by Morishita Bengara K.K.) | 0.5 |
| | Titanium yellow (TY-70; manufactured by Ishihara Sangyo Kaisha, Ltd.) | 1 |
| Dispersant | Zinc stearate (manufactured by Sakai Chemical Industry Co., Ltd.) | 1 |
| Nucleus | PP resin powder (M-1500, 30-100 meshes; manufactured by Asahi Chemical Industry Co., Ltd.) | 4 |

By the above formulation, a beige granular colorant was obtained (Sample 1-1).

**TABLE 2**

| (Colorant Formulation 1-2) | | |
|---|---|---|
| | Formulation Component | Amount(parts) |
| Coloring component | Oil yellow dye (Yellow 433; manufactured by Nippon Kayaku Co.Ltd.) | 0.4 |
| | Oil Orange (Orange JLS-PS; manufactured by Nippon Kayaku Co., Ltd.) | 0.1 |
| | Titanium Oxide (SR-1; manufactured by Sakai Chemical Industry Co., Ltd.) | 5 |
| Dispersant | Bisamide (manufactured by Nichiyu Co.) | 1 |
| Nucleus | PS resin powder (G-20, 30-100 meshes; manufactured by Nippon Steel Corp.) | 4 |

By the above formulation, a yellow granular colorant was obtained (Sample 1-2)

**TABLE 3**

| (Colorant Formulation 1-3) | | |
|---|---|---|
| | Formulation Component | Amount(parts) |
| Coloring component | Sudan blue dye (Blue N; manufactured by Nippon Kayaku Co.) | 1 |
| Dispersant | Surfactant (TB-123; Manufactured by Matsumoto Yushi Co., Ltd. | 1 |
| Nucleus | AS resin powder (SAN-C100, 30- meshes; Manufactured by Mitsubishi Monsanto Co., Ltd.) | 98 |

By the above formulation, a transparent blue granular colorant was obtained (Sample 1-3)

### (EXAMPLE 2)

An appropriate amount of a coloring component of a dye or a pigment, a dispersant, and a synthetic resin powder as a nucleus, in the formulation shown in Tables 4-6 below, were mixed with a mixing machine in the same manner as in Example 1. After mixing for three minutes, the mixing was stopped, a binder was added to the mixture at the time that melting of the dispersant did not proceed, and the mixing was again conducted for about 3 to 4 minutes.

The granular colorant thus obtained was passed through the sieve in the same manner as in Example 1 to make the particle size uniform.

**TABLE 4**

| (Colorant Formulation 2-1) | | |
|---|---|---|
| | Formulation Component | Amount(parts) |
| Coloring component | Phthalocyanin Green (S-SS; manufactured by Dainippon Ink and Chemicals Mfg., Co., Ltd.) | 0.5 |
| | Titanium oxide (SR-1; manufactured by Sakai Chemical Co., Ltd.) | 5 |
| Dispersant | Zinc Stearate | 0.4 |
| | Magnesium stearate | 0.6 |
| Nucleus | PP resin powder (W-1500, 30-100 meshes; manufactured by Asahi Chemical Industry Co., Ltd. | 4 |
| Binder | Polyvinyl butyral (ESREC BX-2; manufactured by Sekisui Chemical Co.) | 0.2 |

By the above formulation, a green granular colorant was obtained (Sample 2-1)

**TABLE 5**

| (Colorant Formulation 2-2) | | |
|---|---|---|
| | Formulation Component | Amount(parts) |
| Coloring component | Titanium oxide (SR-1; manufactured by Sakai Chemical Co., Ltd.) | 4.5 |
| Dispersant | Zinc stearate | 1 |
| Nucleus | PP resin powder (M-1500, 30-100 meshes; manufactured by Asahi Chemical Industry Co., Ltd. | 4 |
| Binder | Ionomer resin (HIMIRAN 1702; manufactured by Mitsui DuPont Co.Ltd.) | 0.5 |

By the above formulation, a white granular colorant was obtained (Sample 2-2).

**TABLE 6**

| (Colorant Formulation 2-3) | | |
|---|---|---|
| | Formulation Component | Amount(parts) |
| Coloring component | Carbon black (MA-100; manufactured by Mitsubishi Chemical Corp.) | 0.5 |
| | Titanium oxide (SR-1; manufactured by Sakai Chemical Co. Ltd.) | 5 |
| Dispersant | Bisamide (manufactured by Nichiyu Co., Ltd.) | 1 |
| Nucleus | AS resin powder (050, 30 - 100 meshes; manufactured by Daicel Chemical Industries, Ltd.) | 6 |
| Binder | Oil resin (PICOLASTIC; manufactured by Yuka Hercules Co. Ltd.) | 0.3 |
| Plasticizer | DBP | 0.05 |

By the above formulation, a gray granular colorant was obtained (Sample 2-3).

### (EXAMPLE 3)

Each of the samples of the granular colorants obtained in Examples 1 and 2 was added to each of a resin shown in Table 7 below, and mixed. The resulting mixture was injection molded to prepare a test plate. Dispersion state of color was examined in each plate. The results obtained are shown in Table 7 below.

**TABLE 7**

| Sample No. | Molding Resin | Amount of sample added (wt%) | Dispersion of Color |
|---|---|---|---|
| 1-1 | PP | 1 | Good |
| 1-2 | PS | 1 | Good |
| 1-3 | AS | 1 | Good |
| 2-1 | Nylon 6 | 1 | Good |
| 2-2 | PP | 1 | Good |
| 2-3 | ABS | 2 | Good |

As is apparent from the results shown in Table 7 above, the dispersion state of color is satisfactory in all of the colorants according to the present invention.

As described above, the granular colorant for synthetic resin according to the present invention has the following advantages:
(1) The granular colorant can be produced by merely mixing a thermoplastic resin powder as a nucleus, a coloring component comprising a dye or a pigment, a dispersant, and optionally, a binder, with a mixing machine. Thus, the production step is very simple;
(2) The particle size is uniform, weighing accuracy is high, the mixing ratio of the colorant with a resin can be made constant, and dispersibility in the thermoplastic molding resin is good. Therefore, the molded product does not have scatter in color;
(3) There is no scatter of the colorant, there is no contamination to a working environment, molding machine and operators, and it is easy to clean the parts of the molding machine e.g. hoppers when changing a color; and
(4) The colorant exhibits remarkable functions and effects that the production is easy, and the production cost is low, as described above.

## Claims

1. A granular colorant for a synthetic resin, comprising:
99 to 1 parts by weight of thermoplastic resin powder particles having a particle size of 5 to 100 meshes, as a nucleus, and
1 to 99 parts by weight of a colorant composition which comprises a coloring component selected from organic or inorganic dyes and organic or inorganic pigments, and a dispersant, the colorant composition being fixed onto the surface of the thermoplastic resin powder particles.

2. The colorant as claimed in claim 1, further comprising a binder in an amount of 1 to 10 parts by weight per 100 parts by weight of the colorant composition.

3. The colorant as claimed in claim 1 or 2, wherein the granular colorant has a particle size of 7 to 100 meshes.

4. A process for producing the colorant as claimed in claim 1, which comprises mixing a thermoplastic resin powder as a nucleus, a coloring component selected from organic or inorganic dyes and organic or inorganic pigments, and a dispersant with a mixing machine, and fixing the coloring component onto the surface of particles of the thermoplastic resin powder by the action of the dispersant.

5. The process as claimed in claim 4, wherein the coloring component is fixed onto the surface of the thermoplastic resin powder particles by melting the dispersant by friction heat generated during mixing with the mixing machine.

6. The process as claimed in claim 1, wherein the thermoplastic resin powder, the coloring component, and the dispersant are mixed with a mixing machine, and a binder is added to the resulting mixture, whereby the coloring component is fixed onto the surface of particles of the thermoplastic resin powder.

7. The process as claimed in claim 6, wherein the thermoplastic resin powder, the coloring component, and the dispersant are mixed, and the binder is then added to the resulting mixture at a time when the friction heat generated by mixing does not sufficiently rise, and the resulting mixture is further mixed.
